(19) Europäisches Patentamt
European Patent Office
Office européen des brevets

(11) **EP 1 013 488 A1**

(12) **EUROPÄISCHE PATENTANMELDUNG**

(43) Veröffentlichungstag:
28.06.2000 Patentblatt 2000/26

(51) Int. Cl.⁷: **B60H 1/00**

(21) Anmeldenummer: **99124205.8**

(22) Anmeldetag: **03.12.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.12.1998 DE 19860235**
**03.02.1999 DE 19904143**

(71) Anmelder: **DaimlerChrysler AG**
**70567 Stuttgart (DE)**

(72) Erfinder:
• **Holdgrewe, Kai**
**71409 Schwaikheim (DE)**
• **Kuhn, Klaus-Peter, Dr.**
**73655 Plüderhausen (DE)**
• **Onnen, Christian**
**73730 Esslingen (DE)**
• **Proettel, Andreas**
**71397 Leutenbach (DE)**
• **Reitter, Christian**
**70376 Stuttgart (DE)**

(54) **Verfahren zur Regelungen einer Heiz- und/oder Klimaanlage**

(57) Die Erfindung betrifft ein Verfahren zur Regelung einer Heiz- und/oder Klimaanlage, wobei ein Bediener über eine Bedieneinheit Bedieneingriffe ausführen kann, die zu verschiedenen Einstellungen der Heiz- und/oder Klimaanlage führen und wobei in eine Steuereinheit verschiedene Parameter eingelesen und verarbeitet werden. Erfindungsgemäß ist vorsehen, daß

- zu den Parametern Klimasituationen definiert werden,
- zu einem Bedieneingriff eine bestimmte Klimasituation erkannt wird,
- zu dem jeweiligen Bedieneingriff die Klimasituation zugeordnet wird,
- bei einer herrschenden Klimasituation die zum zugeordneten Bedieneingriff gehörenden Einstellungen der Klimaanlage ausgeführt werden.

Fig. 1

**Beschreibung**

Die Erfindung betrifft eine Regelung einer Heiz- und/oder Klimaanlage gemäß den gattungsbildenden Merkmalen des Anspruchs 1.

Ein gattungsgemäßes Verfahren zur Regelung einer Heiz- und/oder Klimaanlage ist aus der DE 4023554 C2 bekannt, welche eine Bedieneinheit aufweist, an der ein Bediener Bedieneingriffe ausführen kann. Die Bedieneinheit weist verschiedene Einstellelemente für eines von mehreren alternativen Arbeitsprogrammen für die Temperaturregelung und/oder Luftverteilung auf. Es werden hierzu verschiedene Parameter, beispielsweise über Temperaturfühler in eine Steuereinheit eingelesen und werden zusätzlich für die Temperaturregelung und/oder Luftverteilung verwendet.

Bei dieser Art einer Regelung einer Heiz- und/oder Klimaanlage ist von Nachteil, daß die persönlichen Vorlieben und Wünsche des Benutzers nicht berücksichtigt werden. So sieht die Regelung einer Heiz- und/oder Klimaanlage aus regelungstechnisch vielleicht sinnvollen Gründen beispielsweise vor, das Gebläse bei einem stark aufgeheizten Innenraum in der höchsten Stufe zu blasen. Der Benutzer möchte dies vielleicht nicht. Er nimmt vielleicht lieber in Kauf, zu schwitzen, als ein lautes und starkes Gebläse zu ertragen. Er wird die Gebläsestufe folglich zurückstellen. Auch beim nächsten Mal bei der gleichen oder ähnlichen Situation wird das Gebläse eine hohe Gebläsestufe einstellen.

Der Erfindung liegt daher die Aufgabe zugrunde, ein Verfahren zur Regelung einer gattungsgemäßen Heiz- und/oder Klimaanlage derart weiterzubilden, daß die Heiz- und/oder Klimaanlage nach den individuellen Wünschen und Vorlieben des Bedieners automatisch betrieben wird.

Erfindungsgemäß wird die Aufgabe durch die Merkmale des Anspruchs 1 gelöst. Vorteilhafte Aus- und Weiterbildungen des Erfindungsgegenstandes sind durch die Merkmale der Unteransprüche gekennzeichnet.

Ein wesentlicher Vorteil dieser Ausgestaltungen liegt darin, daß die Heiz- und/oder Klimaanlage nicht nach den bloßen Vorgaben, sondern nach den individuellen Wünschen eines Benutzers geregelt wird. So werden die Bedieneingriffe benutzt, um die Vorlieben des Benutzers bei einer herrschenden Klimasituation zu ermitteln. So kann die Heiz- und/oder Klimaanlage in vorteilhafter Weise selbsttätig nach diesen ermittelten Vorlieben eingestellt werden.

Die Erfindung wird anhand eines Ausführungsbeispieles in Verbindung mit einer Figurenbeschreibung näher erläutert. Es zeigt

Fig. 1 ein Schaubild zur Verdeutlichung der Regelung einer Heiz- und/oder Klimaanlage;

Fig. 2 einen Situationsbaum,

Fig. 3 ein Schaubild zur Betrachtung der Einzelwahrscheinlichkeiten,

Fig. 4 ein Schaubild der Wahrscheinlichkeiten der Klimasituation, sowie

Fig. 5 ein Schaubild der Wahrscheinlichkeit der Situationsnummer n.

Fig. 6 ein Flußdiagramm zum Verlauf der Klimasituationserkennung.

Fig. 7 ein Flußdiagramm zum Verlauf der Klimasituationserkennung mit einer bedienerabhängigen Adaption der ähnlichen Klimasituationen.

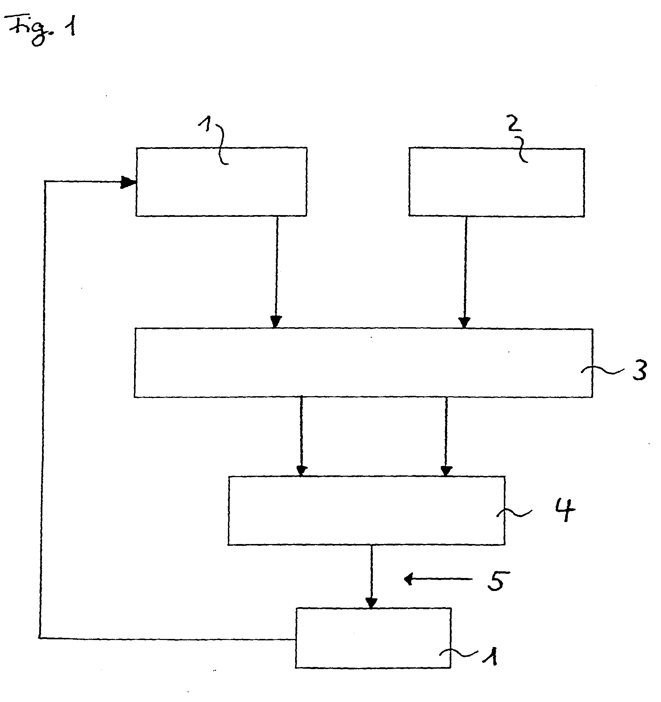

Fig. 1 zeigt ein Schaubild zur Verdeutlichung der Regelung einer Heiz- und/oder Klimaanlage. Zuerst wird die Klimasituationserkennung zur Klassifizierung der Bedieneingriffe beschrieben und der zweite Teil beschreibt dann das Lernen und das Stellen von Bedieneingriffen. Die Bedieneingriffe werden vom Benutzer an einer im Fahrzeug angeordneten Bedieneinheit vorgenommen. Das Klimasteuergerät 1 gibt die eingelesenen Parameter wie beispielsweise die Außentemperatur, Innenraumtemperatur an eine Klimasituationserkennung 3 weiter. Von einer Recheneinheit 2 werden dann noch andere Parameter wie Fahrertyp und Nervosität zur Klimasituationserkennung 3 benötigt. Es wird die wahrscheinlichste Situation und die ähnlichen Klimasituationen bestimmt. In 4 erfolgt dann entsprechend der wahrscheinlichsten Klimasituation eine klimasituationsabhängige Klimaeinstellung und Adaption der ähnlichen Klimasituationen. Es wird ein fingierter Bedieneingriff 5 an das Klimasteuergerät 1 übermittelt, nach welchem das Klimasteuergerät 1 die Einstellungen der Heiz- und/oder Klimaanlage regelt.

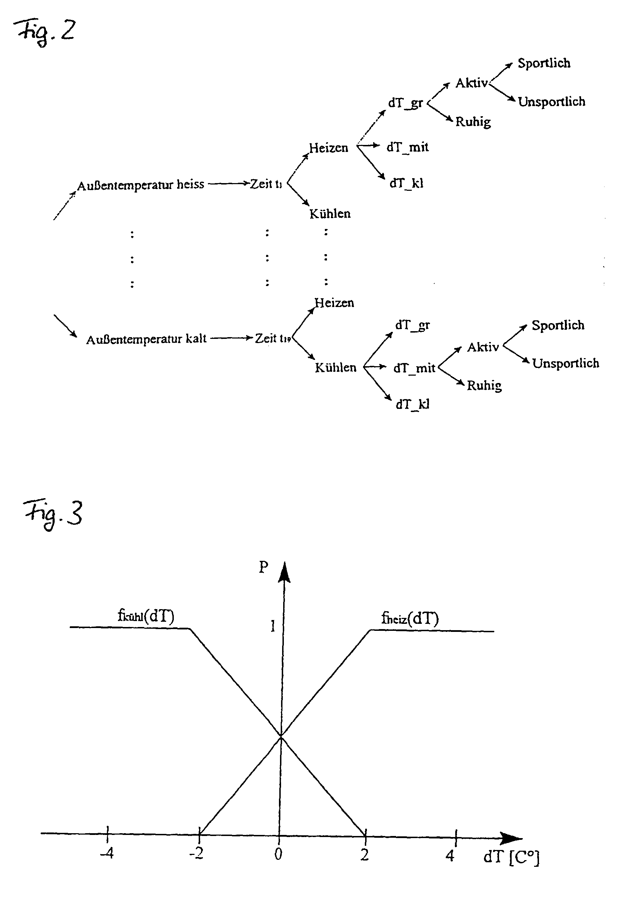

Fig. 2 zeigt einen Ausschnitt den der Klimasituationserkennung zugrundeliegenden Situationsbaum. Das Fahrzeugklima und die Klimasituation im Fahrzeug hängt von vielen Faktoren und Umwelteinflüssen ab, die nicht ausreichend genau ermittelt oder beschrieben werden können. Mit dem Situationserkennungsalgorithmus soll nun mit einigen Faktoren, die im folgenden näher beschrieben werden, die vorherrschende Klimasituation erkannt und klassifiziert werden.

1.Ein wichtiges Maß für die Erkennung von Klimasituationen und Verhaltensweisen ist die Zeit, da viele Eingriffe in Abhängigkeit zur Zeit erfolgen.

2.Die Unterscheidung bzgl. der Außentemperatur ist wichtig, da sich nicht nur Verhaltensweisen (z:B. bei - 15°C) sondern auch die Bekleidung der Personen ändert. Woraus sich wieder verschiedene individuelle Verhaltensmuster bezüglich der Klimaanlage ergeben. Die Differenzierung erfolgt mit der Außentemperatur $Ta$. Dieser Wert wird aber nur zum Beginn einer Fahrt ermittelt, da der Einfluß der Außentemperatur während der Fahrt sich mittels einer Änderung der Innentemperatur bemerkbar macht und damit der Einfluß der Außentemperatur auch implizit mitberücksichtigt wird.

3.Der Reiz- oder Kühlfall hängt von der Differenz der Innensolltemperatur und der tatsächlichen Innentemperatur ab. Wenn die Differenz $dT$ negativ ist, liegt der Kühlfall vor. Die Innentemperatur ist zu hoch und muß mit Hilfe von Kühlung verringert werden. Der Heizfall ergibt sich analog diametral zum Kühlfall.

4.Ein wichtiger Faktor ist auch die Größe der Differenz zwischen der Innentemperatur und der Solltemperatur. Die Größe ist entscheidend für verschiedene Regelstrategien des Systems und des Benutzers, da bei einer hohen Differenz z.B. die Gebläsestufe erhöht oder die Ausblastemperatur der Düsen verändert wird.

5.Eine weitere Größe ist die Aktivität des Fahrers. Ein sehr aktiver Fahrer verfügt von sich aus über ein höheres Wärmepotential und benötigt daher auch weniger Heiz- bzw. mehr Kühlleistung. Im folgenden wird dieser Wert als *nft* bezeichnet.

6.Ein weiterer Faktor ist die Sportlichkeit, der im weiteren mittels des Wertes *sport* ausgedrückt wird. Ein sportlicher Fahrer wird zu anderen Bedieneingriffen neigen als ein Fahrer, der eher unsportlich fährt. Ein sportlicher Fahrer muß z.B. mehr Aufmerksamkeit dem Straßenverkehr widmen als ein unsportlicher Fahrer und neigt daher zu anderen Bedieneingriffen.

Jeder dieser Faktoren wird mit einer Wahrscheinlichkeit versehen, mit welcher dieser Zustand vorliegt. Um die Gesamtwahrscheinlichkeit der Klimasituationen zu erhalten, werden die Einzelwahrscheinlichkeiten miteinander multipliziert. Aus diesen Einzelsituationen ergibt sich somit eine mögliche Kombination von 24 Klimasituationen. Jedem Bedieneingriff wird dann eine bestimmte Klimasituation zugeordnet. Werden noch mehr Faktoren betrachtet, erhöht sich die Zahl der möglichen Klimasituationen.

Fig. 3 zeigt in einem Schaubild die Einzelwahrscheinlichkeit des Faktors Heizen-Kühlen. Der Übergangsbereich zwischen Heizen und Kühlen wird unscharf betrachtet. Diese Betrachtung erfolgt über abschnittsweise definierte jedoch stetige Funktionen, die in der Summe der einzelnen Funktionen pro Faktor immer 1 ergeben. Die anderen Funktionen ergeben sich analog hierzu. Jeder Faktor besitzt den Wert 1, wenn die Situation eindeutig ist und in den Übergangsbereichen werden anteilig Werte zwischen 1 und 0 vergeben. Die Summe der Faktoren der Einzelsituationsanteile ergeben immer 1. Durch eine Multiplikation der verschiedenen Einzelsituationen läßt sich die Situation ermitteln, die mit der höchsten Wahrscheinlichkeit vorliegt.

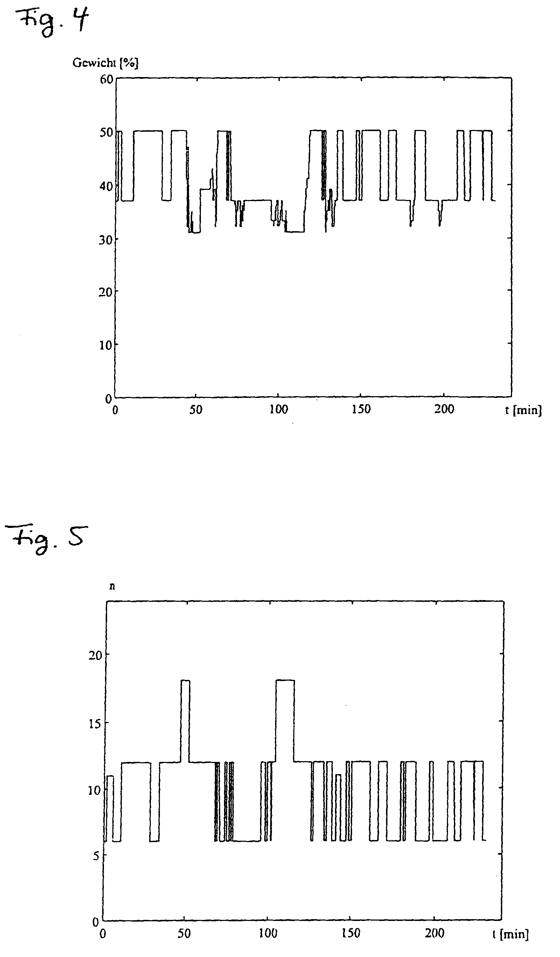

In Fig. 4 wird die Maximale der Situationswahrscheinlichkeiten P und in Fig. 5 die zugehörige Situationsnummer n einer realen Fahrt über der Zeit t dargestellt. Die Wahrscheinlichkeiten schwanken in einem erheblichen Maße. Es gibt also Randbedingungen, die nicht mit hoher Wahrscheinlichkeit eindeutig einer Klimasituation zugeordnet werden können. Es ist eine Identifizierung der Klimasituation nicht möglich und dadurch eine eindeutige Zuordnung eines Bedieneingriffes nicht möglich. Eine sehr wahrscheinliche Klimasituation weist eine Wahrscheinlichkeit von mehr als 30% auf. Es werden zusätzlich noch ähnliche Klimasituationen klassifiziert, die auch eine gewisse Wahrscheinlichkeit aufweisen. Diese Klimasituationen sind daher in einem gewissen Maße miteinander ähnlich. Diese Ähnlichkeit wird als Quotient der ähnlichen Klimasituation mit der wahrscheinlichsten Klimasituation beschrieben. Dieses Maß gibt in Prozent den Grad der Ähnlichkeit zu der anderen Klimasituation an. Beispielsweise hat die Klimasituation 12 die Wahrscheinlichkeit 80% und die Klimasituation 17 die Wahrscheinlichkeit von 20%, dann weist die Klimasituation 17 einen Ähnlichkeitsgrad von 25% zur Klimasituation 12 auf.

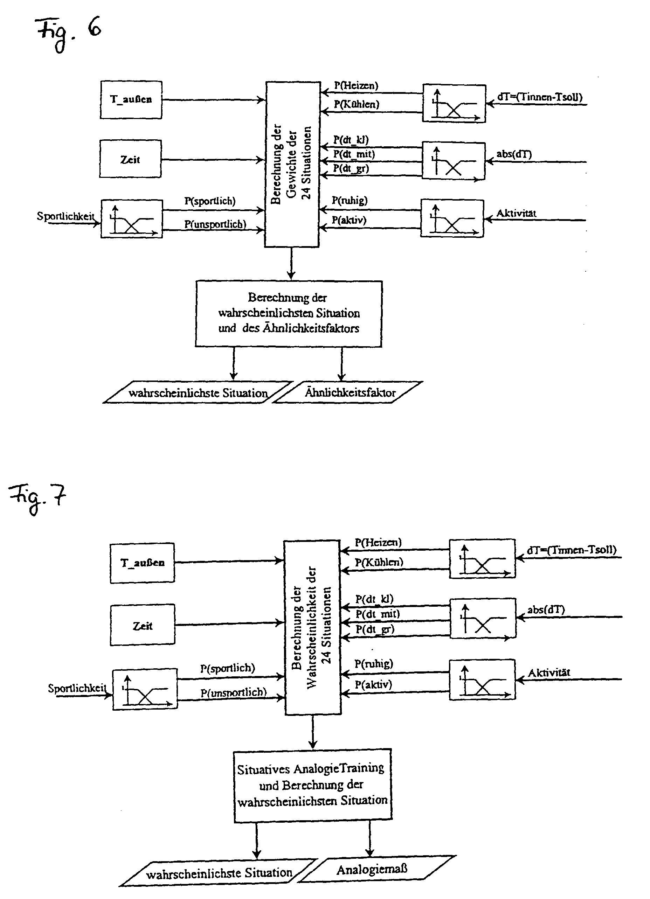

Fig. 6 zeigt ein Flußdiagramm zum Verlauf der Klimasituationserkennung. Für den Lern- und Stellalgorithmus muß die Klimasituationserkennung folgende Schritte durchführen und die Ergebnisse zur weiteren Benutzung zur Verfügung stellen.

➢Bestimmung des Außentemperaturbereiches
➢Bestimmung des Zeitbereiches
➢Bestimmung der Situation mit dem maximalen Gewicht.
➢Bestimmung der ähnlichen Situationen und deren Wahrscheinlichkeit (als ähnlich wird die Situation angesehen, deren Wahrscheinlichkeit größer Null ist).
➢Ermittlung des Ähnlichkeitsfaktors mittels Division der ähnlichen Situationen und der Situation mit der maximalen Wahrscheinlichkeit.

In diesem Ausführungsbeispiel wurden 24 Klimasituationen klassifiziert, die in einem großen Maße zu verschiedenen Einstellungen der Klimaanlage führen. In der folgenden Ausführung werden zum besseren Verständnis als Stellglieder nur die linke Solltemperatur des Fahrers und die Gebläsestufe betrachtet. Eine Erweiterung auf die anderen Einstellmöglichkeiten der Klimaanlage ist problemlos durchführbar. Jeder Klimasituation ist zu Beginn eine Grundeinstellung der Klimaanlage zugeordnet. Als Grundeinstellung wählt man beispielsweise für alle Klimasituationen eine mittlere Gebläsestufe und eine Innenraumsolltemperatur von 22°C. Wurde zu Beginn der Fahrt keine Klimasituation eindeutig klassifiziert, da die Klimasituationswahrscheinlichkeit unter 30% liegt, wird die Grundeinstellung der Klimaanlage voreingestellt. Dies gilt auch dann, wenn die Zuordnung der 24 Klimasituationen zu den Bedieneingriffen schon seit längerem erfolgt, aber keine Klimasituation eine Wahrscheinlichkeit aufweist, die größer 30% ist. Wurde zu Beginn einer Fahrt eine Klimasituation eindeutig erkannt, dann wird die Klimaanlage mit den Werten des zugeordneten Bedieneingriffes eingestellt. Im allgemeinen kann die Klimasituation einer Änderung unterliegen, die sich durch einen persönlichen (Änderung der Sportlichkeit des Fahrers) oder auch peripheren Einfluß (Änderung der Differenz Innentemperatur und Innensolltemperatur) bemerkbar macht. Bei einer Änderung einer Klimasituation während einer Fahrt durch einen persönlichen oder peripheren Einfluß, wird eine vorbestimmte Zeit gewartet, bevor eine Zuordnung zu einem Bedieneingriff erfolgt. Die vorbestimmte Zeit kann beispielsweise 10s sein. So führen kurzfristige Änderungen der Klimasituation, die beispielsweise durch eine kurze Aktivität ausgelöst wurden, nicht zur Ausführung der Einstellungen der Klimaanlage des zugeordneten Bedieneingriffes. Bleibt die Änderung der Klimasituation länger als die vorbestimmte Zeit erhalten, wird die zu dieser Klimasituation entsprechend des zugeordneten Bedieneingriffes zugeordnete Einstellung der Heiz- und/oder Klimaanlage neu ausgeführt. Wird durch Wechsel der Klimasituation eine Verstellung von mehr als einer Stufe nötig, so wird die neue Einstellung über eine Rampe angefahren. Bei einer Erhöhung des Gebläses um zwei Stufen, wird zuerst nur eine Gebläsestufe erhöht, die nächste Erhöhung erfolgt dann erst nach einer vorbestimmten Zeit von beispielsweise 20 s. Dieses langsame Ändern der Einstellungen erhöht das Komfortempfinden, da die selbständige Änderung der Einstellung unbemerkter erfolgt.

Führt die automatische Einstellung zu einem angenehmen Innenraumklima, beläßt der Fahrer die Einstellung. Ist das Innenraumklima nicht optimal, wird der Fahrer einen Bedieneingriff tätigen. Dieser Bedieneingriff wird, um dem Fahrer die Möglichkeit zur Korrektur eines ungewollten Bedieneingriffs zu geben, erst nach einer vorbestimmten Zeit der herrschenden Klimasituation zugeordnet. Eine Zuordnung eines Bedieneingriffes zu einer Klimasituation in vorbestimmten Schritten erfolgt und eine vollständige Zuordnung erst erfolgt, wenn dieser Bedieneingriff zur gleichen Klimasituation wiederholt wurde. Ein Bedieneingriff muß zu der gleichen Klimasituation wiederholt worden sein, bevor eine eindeutige Zuordnung erfolgt. Dadurch wird gewahrleistet, daß der Bedieneingriff begründet ist und beim nächsten Auftreten der Situation gewollt ist. Durch die Wiederholungsrate des Bedieneingriffs ist ein höheres Maß an Zuverlässigkeit gewährleistet. Die ähnlichen Klimasituationen werden mitbetrachtet, so daß eine Anpassung auch auf die benachbarten Klimasituationen erfolgt. Diese Auswirkung wird durch die Verwendung des Ähnlichkeitsfaktors bestimmt. Damit wird erreicht, daß sich die ähnlichen Klimasituationen anpassen und somit eine kontinuierliche Zuordnung ermöglicht wird. Die ähnlichen Klimasituationen adaptieren sich mit in die Richtung der wahrscheinlichsten Klimasituation und ermöglichen so bei einem Wechsel der Klimasituation eine höher wahrscheinliche gewünschte Einstellung der Klimaanlage, da die Tendenzen der individuellen Bedieneingriffe mitberücksichtigt worden sind.

Die gelernte Zuordnung ist in einer 3-dimensionalen Matrix der Größe 7 x 19 x 24 abgespeichert. Die Achsen der Matrix stellen die Außentemperaturbereiche, die Zeitbereich und die Klimasituationen dar. Der Inhalt der Matrix ist die Einstellungen der Klimaanlage, also die gewünschte Innensolltemperatur und Gebläsestufe. Die Adaption erfolgt nicht nur punktuell an der Stelle, an der ein Bedieneingriff erfolgt ist, sondern auch in einer Umgebung um den Punkt. Diese Umgebung beinhaltet bzgl. der Außentemperatur jeweils zwei Bereiche vor und nach dem aktuellen Bereich, und bzgl. der Zeit werden zwei Bereiche vor dem aktuellen Zeitpunkt mitberücksichtigt. Es wird nicht der Zeitbereich in die Zukunft mitberücksichtigt, wenn zu diesem Zeitpunkt noch nichts gelernt wurde (Lernflag nicht gesetzt), da der Bediener zum jetzigen Zeitpunkt die Einstellung wünscht und keine Veränderungen mehr in der unmittelbaren Zukunft wünscht. Es sei denn, er hat dies mit einem erfolgten Bedieneingriff schon mal geäußert. Diese Veränderung würde sich nach einer erneuten Fahrt ergeben, da dann das gelernte Zeitprofil mit der Klimaanlage nachgefahren werde würde. Wenn aber schon in den beiden folgenden Zeitbereichen was gelernt worden ist, wird auch die neue Einstellung in die Zukunft mitberücksichtigt. Um den Bedieneingriff auch in der Zeit nach dem Eingriff mitzuberücksichtigen, werden die gelernten Eingriffe der aktuellen Zeit nachgefahren. Wenn also der Bedieneingriff in der zweiten Minute erfolgt ist (z.B. Verstellung der Innensolltemperatur von 22°C auf 23°C) und der gelernte Wert in diesem Beispiel 22.4°C beträgt, dann wird auch der zugehörigen Kennfeldpunkt der dritten Minute in Bezug zur aktuellen Einstellung gelernt. Der Bediener bestätigt also implizit mit einem NICHT-Eingriff in der Folgezeit seine gewünschte und schon erfolgte Einstellung. Dieser Eintrag wird auch bei den ähnlichen Situationen auf die gleiche Weise durchgeführt.

**Schritte der Adaption**

➢ Ermittlung des Abstandes *delta* des Ist und Sollzustandes aus dem bereits vorher gelernten in der Matrix gespeicherten und dem gestellten Bedieneingriff.
➢ Adaption der gelernten Bedieneingriffe bzw. der Grundeinstellung mit folgender Vorschrift:

$$neuer\_wert(ta,t,index) = \left\{ \begin{array}{l} alter\_wert(ta,t,index) + \\ delta * \left( -0.05 * \left( (ta-2)^2 + (t-2)^2 \right) + 0.4 \right) * \ddot{a}hnl\_fakt(index) \end{array} \right. \qquad (4.1)$$

wobei $ta \in \{Z;[-2;2]\}$ und $t \in \{Z;[-2;2]\}$ (elliptischer Paraboloid) Es wird also auch in einer Außentemperatur- und Zeitumgebung gelernt!
➢ Die Adaption der ähnlichen Situationen erfolgt mit der gleichen Formel, nur wird das Adaptionsmaß mit dem zugehörigen Ähnlichkeitsfaktor multipliziert.
➢ Speicherung des neu gelernten Bedieneingriffs
➢ Lernen der neuen Einstellung auch im nachfolgenden Zeitfenster inklusive der ähnlichen Situationen, wenn in diesem Zeitbereich kein neuer Bedieneingriff oder eine Situationsänderung erfolgt.
➢ Lernen der neuen Einstellung auch bei einem länger als 10 sec anhaltenden Situationswechsel inklusive der ähnlichen Situationen, wenn kein neuer Bedieneingriff oder eine Situationsänderung erfolgt.

Fig. 7 zeigt ein Flußdiagramm zum Verlauf der Klimasituationserkennung mit einer bedienerabhängigen Adaption der ähnlichen Klimasituationen. Als weitere Ausführung können die ähnlichen Klimasituationen bedienerabhängig gemacht werden. Die Adaption der ähnlichen Klimasituationen erfolgt mit der gleichen Formel, nur wird das Adaptionsmaß mit dem zugehörigen Ähnlichkeitsfaktor multipliziert. Diese Ähnlichkeit ist von Grund an auf den Situationsbaum bezogen und daher von den einzelnen Parametern, die diese Situation beschreiben, abhängig. Dieses Ähnlichkeitsmaß beruht aber auf der Meinung des Entwicklers, was ähnlich zueinander in Abhängigkeit vom Situationsbaum ist und es ist unabhängig von der individuellen Einschätzung des Bedieners. Um die Adaption ähnlicher Klimasituationen zu verbessern, so daß der Bediener bestimmt, welche Situation für ihn ähnlich ist, wird vorgeschlagen: Eine Klimasituation ist zu einer anderen ähnlich, wenn der Klimasituationswechsel ohne Bedieneingriff erfolgt. Das Ähnlichkeitsmaß wird fortlaufend individuell angepaßt. Es werden die Klimasituationswechsel betrachtet, die einen Bedieneingriff nach sich führen, und die, die keinen Bedieneingriff nach sich führen. Dieser Wechsel der Klimasituationen wird mit einem bestimmten Gewicht bewertet, wobei das Vorzeichen des Gewichtes davon abhängt, ob ein Bedieneingriff erfolgt oder nicht. Ein Klimasituationswechsel ohne Bedieneingriff wird mit 5% gewertet. Ein Klimasituationswechsel mit manuellem Eingriff wird mit -15% und ein gelernter Bedieneingriff mit 10% gewertet. Die Bedieneingriffe werden stärker bewertet, da diese Bedieneingriffe den Unterschied der Klimasituationen stärker dokumentieren als ein nicht durchgeführter Bedieneingriff. Der manuelle Bedieneingriff wird stärker gewichtet, da er eine direkte Rückmeldung des Bedieners an das System ist, daß er diese Klimasituation anders einschätzt und einen Bedieneingriff für nötig hält. Der gelernte Bedieneingriff berücksichtigt eine schon zuvor getroffene Entscheidung und wird daher schwächer bewertet.

**Patentansprüche**

1. Verfahren zur Regelung einer Heiz- und/oder Klimaanlage, wobei ein Bediener über eine Bedieneinheit Bedieneingriffe ausführen kann, die zu verschiedenen Einstellungen der Heiz- und/oder Klimaanlage führen und wobei in eine Steuereinheit verschiedene Parameter eingelesen und verarbeitet werden,
**dadurch gekennzeichnet,**
daß

- zu den Parametern Klimasituationen definiert werden,
- zu einem Bedieneingriff eine bestimmte Klimasituation erkannt wird,
- zu dem jeweiligen Bedieneingriff die Klimasituation zugeordnet wird,
- bei einer herrschenden Klimasituation die zum zugeordneten Bedieneingriff gehörenden Einstellungen der Klimaanlage selbsttätig ausgeführt werden.

**2.** Verfahren zur Regelung einer Heiz- und/oder Klimaanlage nach Anspruch 1,
**dadurch gekennzeichnet,**

daß die Klimasituation über parameterabhängige Faktoren bestimmt wird, wobei jeder Faktor mit einer Wahrscheinlichkeit versehen ist, mit der dieser Zustand vorliegt und zum Erhalt der Gesamtwahrscheinlichkeit die Einzelwahrscheinlichkeiten miteinander multipliziert werden.

**3.** Verfahren zur Regelung einer Heiz- und/oder Klimaanlage nach den Ansprüchen 1 und 2,
**dadurch gekennzeichnet,**

daß die Klimasituation mit der höchsten Wahrscheinlichkeit die zum Bedieneingriff zugeordneten Einstellungen der Heiz- und/oder Klimaanlage vorgibt.

**4.** Verfahren zur Regelung einer Reiz- und/oder Klimaanlage nach den Ansprüchen 1 bis 3,
**dadurch gekennzeichnet,**

daß zu einem Bedieneingriff ähnliche Klimasituationen mit ihren Wahrscheinlichkeiten bestimmt werden, die bei Änderung einer Zuordnung von Klimasituation und Bedieneingriff mitangepaßt werden.

**5.** Verfahren zur Regelung einer Heiz- und/oder Klimaanlage nach den Ansprüchen 1 bis 4,
**dadurch gekennzeichnet,**

daß zur Adaption ähnlicher Klimasituationen Klimasituationswechsel betrachtet werden, wobei ein Klimasituationswechsel ohne Bedieneingriff mit einer positiven Wahrscheinlichkeit gewertet wird,
ein gelernter Bedieneingriff mit einer höheren positiven Wahrscheinlichkeit gewertet wird,
ein Klimawechsel mit manuellem Bedieneingriff mit einer noch höheren negativen Wahrscheinlichkeit gewertet wird.

**6.** Verfahren zur Regelung einer Heiz- und/oder Klimaanlage nach den Ansprüchen 1 bis 5,
**dadurch gekennzeichnet,**

daß der Bedieneingriff eine vorbestimmte Zeit getätigt sein muß bevor diesem Bedieneingriff eine Klimasituation zugeordnet wird.

**7.** Verfahren zur Regelung einer Heiz- und/oder Klimaanlage nach den Ansprüchen 1 bis 6,
**dadurch gekennzeichnet,**

daß eine Zuordnung eines Bedieneingriffes zu einer Klimasituation in vorbestimmten Schritten erfolgt und eine vollständige Zuordnung erst erfolgt, wenn dieser Bedieneingriff zur gleichen Klimasituation wiederholt wurde.

Fig. 1

Fig. 2

Außentemperatur heiss ────→ Zeit t₁

Heizen

dT_gr

Aktiv

Sportlich

Unsportlich

Ruhig

dT_mit

dT_kl

Kühlen

Außentemperatur kalt ────→ Zeit t₁₇

Heizen

Kühlen

dT_gr

dT_mit

dT_kl

Aktiv

Sportlich

Unsportlich

Ruhig

Fig. 3

f_kühl(dT)     P     f_heiz(dT)

1

-4    -2    0    2    4    dT [C°]

## Fig. 4

## Fig. 5

**Fig. 6**

**Fig. 7**

Europäisches
Patentamt
**EUROPÄISCHER RECHERCHENBERICHT**
Nummer der Anmeldung
EP 99 12 4205

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 511 724 A (FREIBERGER RONALD D  ET AL) 30. April 1996 (1996-04-30) | 1,6 | B60H1/00 |
| A | * Spalte 6, Zeile 33 - Zeile 37 * <br> * Spalte 7, Zeile 1,2 * <br> * Zusammenfassung * <br> --- | 7 | |
| X | DE 44 26 732 A (VOLKSWAGENWERK AG) 16. Februar 1995 (1995-02-16) <br> * Ansprüche 1-3 * <br> --- | 1,7 | |
| X | US 5 078 316 A (HARA JUNICHIRO  ET AL) 7. Januar 1992 (1992-01-07) <br> * Zusammenfassung * <br> * Spalte 6, Zeile 37 - Zeile 66 * <br> --- | 1 | |
| A | DE 38 17 495 A (BAYERISCHE MOTOREN WERKE AG) 30. November 1989 (1989-11-30) <br> * Spalte 1, Zeile 64 - Spalte 4, Zeile 24 * <br> --- | | |
| A | US 5 579 994 A (DAVIS JR LEIGHTON I  ET AL) 3. Dezember 1996 (1996-12-03) <br> * Zusammenfassung * <br> ----- | | RECHERCHIERTE SACHGEBIETE (Int.Cl.7) <br><br> B60H |

Der vorliegende Recherchenbericht wurde für alle Patentansprüche erstellt

| Recherchenort | Abschlußdatum der Recherche | Prüfer |
|---|---|---|
| MÜNCHEN | 22. März 2000 | Placzek, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.  EP 99 12 4205

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-03-2000

| Im Recherchenbericht angeführtes Patentdokument | Datum der Veröffentlichung | Mitglied(er) der Patentfamilie | Datum der Veröffentlichung |
|---|---|---|---|
| US 5511724 A | 30-04-1996 | KEINE | |
| DE 4426732 A | 16-02-1995 | KEINE | |
| US 5078316 A | 07-01-1992 | JP 2296525 A<br>JP 8002729 B | 07-12-1990<br>17-01-1996 |
| DE 3817495 A | 30-11-1989 | KEINE | |
| US 5579994 A | 03-12-1996 | KEINE | |

EPO FORM P0461

Für nähere Einzelheiten zu diesem Anhang : siehe Amtsblatt des Europäischen Patentamts, Nr. 12/82